# EUROPEAN PATENT APPLICATION

(11) **EP 2 447 881 A2**
(43) Date of publication of application: **02.05.2012**
(21) Application number: 11183592.2
(22) Date of filing: 30.09.2011
(51) Int. Cl.: G06K 7/00

(54) **Item checkout device with weigh plate antenna**

(30) Priority: 29.10.2010 US 915075
(71) Applicant: NCR Corporation, Duluth GA 30096 (US)
(72) Inventor: Claessen, Albertus, Oakwood, GA 30566 (US)
(74) Representative: MacLeod, Roderick William

(57) **Abstract**

An item checkout device (10) with antenna which minimizes orientation sensitivity of RFID labels (54). An example checkout device (10) includes a scale (22), a weigh plate (24) on the scale (22), a radio frequency identification label reader antenna including a first portion (32) within the weigh plate (24) and a second portion (80) below the first portion (32), and a radio frequency identification label reader (26) coupled to the second portion (80). The second portion (80) includes a conductive layer with substantially orthogonal slots (82,88) having radiating edges, a drive circuit (100) for driving the slots (82,88) to radiate a circularly polarized electromagnetic field, and a non-conductive layer separating the conductive layer from the drive circuit.

## Description

Barcode scanners are well known for their usefulness in identifying products. Barcode scanners may be equipped with add-on radio frequency identification (RFID) label readers, but barcode label and RFID label reading zones do not coincide, resulting in operator confusion as to item placement. Further, finding space for a RFID label reader antenna is a challenge.

It would be desirable to better integrate RFID label readers with barcode scanners and provide better overlap between barcode label and RFID label reading zones.

An item checkout device with weigh plate antenna is provided.

An example checkout device includes a scale, a weigh plate on the scale, a radio frequency identification label reader antenna including a first portion within the weigh plate and a second portion below the first portion, and a radio frequency identification (RFID) label reader coupled to the second portion. The second portion includes a conductive layer with substantially orthogonal slots having radiating edges, a drive circuit for driving the slots to radiate a circularly polarized electromagnetic field, and a non-conductive layer separating the conductive layer from the drive circuit.

An example radio frequency identification label reader antenna includes a first portion within a weigh plate suitable for operation with a scale of an item checkout device, and a second portion below the first portion including a conductive layer with substantially orthogonal slots having radiating edges, a drive circuit for driving the slots to radiate a circularly polarized electromagnetic field, and a non-conductive layer separating the conductive layer from the drive circuit.

The antenna may be flush mounted within an aperture of the weigh plate and electrically isolated from a remainder of the weigh plate by an insulator. The antenna may include a section of the weigh plate that has been removed, reduced in size to accommodate the insulator, and inserted into the weigh plate.

In an example embodiment, the antenna is wirelessly coupled to an RFID label reader to avoid placing any mechanical load on the weigh plate.

The drive circuit includes circuit paths that form a balanced transmission circuit for driving pairs of orthogonal elements at the ends of the circuit paths. The pairs of orthogonal elements are centered below the slots but cross the slots. The slots radiate the circularly polarized field. A number of the orthogonal elements are adjusted for impedance matching and performance.

According to a first aspect of the invention there is provided a radio frequency identification label reader antenna comprising: a first portion within a weigh plate suitable for operation with a scale of an item checkout device; and a second portion below the first portion including a conductive layer with substantially orthogonal slots having radiating edges, a drive circuit for driving the slots to radiate a circularly polarized electromagnetic field, and a non-conductive layer separating the conductive layer from the drive circuit.

The first portion is optionally flush mounted within the weigh plate.

The first portion is optionally mounted within an aperture in the weigh plate and isolated from a remainder of the weigh plate by an insulator.

The first portion optionally comprises a section of the weigh plate.

The substantially orthogonal slots are optionally "+" shaped from the perspective of an operator.

The substantially orthogonal slots are optionally "x" shaped from the perspective of an operator.

The drive circuit optionally comprises a balanced transmission circuit including first and second circuit paths for driving the slots at different phases.

Each of the first and second circuit paths optionally comprises a power splitter for splitting power between third and fourth paths ending in pairs of substantially orthogonal drive elements.

The third paths optionally induce a ninety-degree phase shift with respect to the fourth paths.

The pairs of substantially orthogonal drive elements are optionally centered about the substantially orthogonal slots but cross the substantially orthogonal slots.

The drive circuit optionally further comprises a balun for splitting power between the first and second circuit paths.

The drive circuit optionally further comprises a connector coupled to the balun for connecting a cable from a radio frequency identification label reader.

According to a second aspect of the present invention there is provided a method of reading a radio frequency identification label comprising: receiving a first signal from a radio frequency identification label reader by an antenna, the antenna including a conductive layer with substantially orthogonal slots having radiating edges; radiating a circularly polarized electromagnetic field by the substantially orthogonal slots; receiving a second signal from the radio frequency identification label within the circularly polarized electromagnetic field by the substantially orthogonal slots; and sending the second signal to the radio frequency identification label reader by the antenna.

The radiating step optionally comprises: splitting the first signal into third and fourth signals along first and second circuit paths; splitting the third signal along fifth and sixth circuit paths; producing a ninety-degree phase shift relative to the sixth circuit path by the fifth circuit path; splitting the fourth signal along seventh and eighth circuit paths; producing a ninety-degree phase shift relative to the eighth circuit path by the seventh circuit path; driving a first pair of substantially orthogonal drive elements of the fifth circuit path; driving a second pair of substantially orthogonal drive elements of the sixth circuit path; driving a third pair of substantially orthogonal drive elements of the seventh circuit path; and driving a fourth pair of substantially orthogonal drive elements of the eighth circuit path.

According to a third aspect of the invention there is provided an item checkout device comprising: a scale; a weigh plate on the scale; a radio frequency identification label reader antenna comprising a first portion within the weigh plate, and a second portion below the first portion including a conductive layer with substantially orthogonal slots having radiating edges, a drive circuit for driving the slots to radiate a circularly polarized electromagnetic field, and a non-conductive layer separating the conductive layer from the drive circuit; and a radio frequency identification label reader coupled to the second portion.

The item checkout device optionally further comprises a barcode reader, wherein the scale and the weigh plate are integrated into the barcode reader.

The barcode reader optionally comprises a laser-based barcode reader.

The barcode reader optionally comprises an imaging-based barcode reader.

The barcode reader optionally has a barcode reading zone, wherein the radio frequency identification label reader has a radio frequency identification label reading zone, and wherein the barcode reading zone and the radio frequency identification label reading zone overlap.

These and other aspects of the invention will be apparent from the following specific description, given by way of example, with reference to the accompanying drawings, in which:

Fig. 1 is a block diagram of an example item checkout device.

Fig. 2 is a view illustrating an example checkout device with a weigh plate removed to expose an antenna driver board.

Fig. 3 is a view of the example checkout device illustrating an example antenna plate.

Fig. 4 is a view illustrating a weigh plate substrate.

Fig. 5 is a view illustrating an antenna driver circuit.

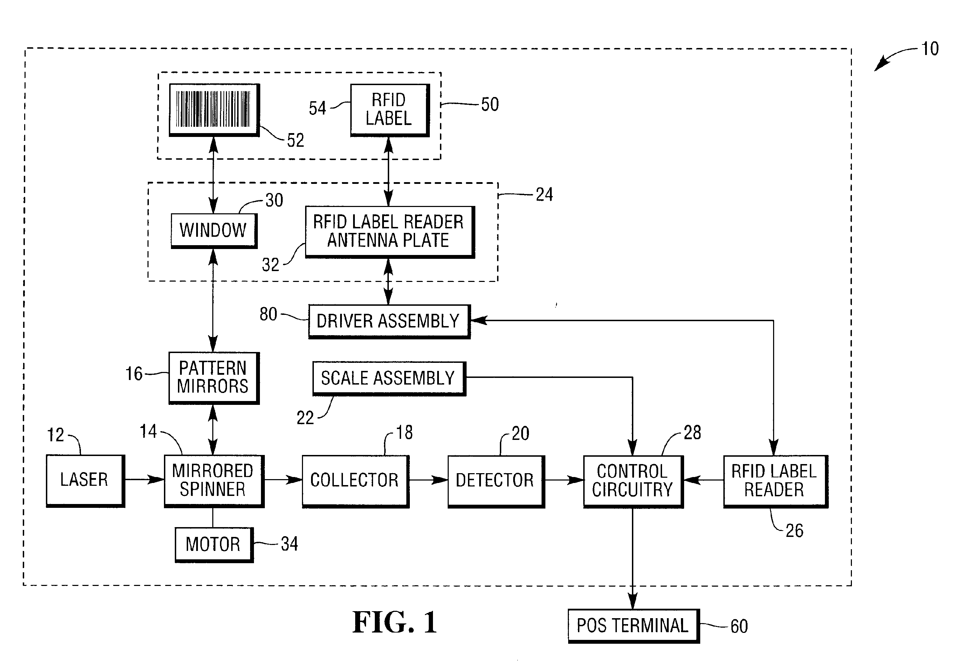

Referring now to Fig. 1, example item checkout device 10 includes laser-based barcode reading components, including laser 12, mirrored spinner 14, pattern mirrors 16, collector 18, and detector 20.

Laser 12 generates a laser beam.

Mirrored spinner 14 directs the laser beam towards pattern mirrors 16 and directs light reflected from item 50 towards collector 18. Motor 34 rotates mirrored spinner 14.

Pattern mirrors 16 produce a pattern of scanning light beams for scanning barcode label 52 on item 50. Pattern mirrors 16 direct the laser beam through window 30 in weigh plate 24 towards item 50 and direct the light reflected from item 50 towards mirrored spinner 16.

Collector 18 directs the light reflected from item 50 towards detector 20.

Detector 20 converts the light reflected from item 50 into electrical signals.

Example item checkout device 10 further includes scale assembly 22, weigh plate 24, radio frequency identification (RFID) label reader 26, and control circuitry 28.

Scale assembly 22 produces electrical signals based upon the weight of produce items placed on weigh plate 24. Scale assembly 22 may include a load cell or other weight measuring device.

Item 50 may be labeled only with barcode label 52, only with RFID label 54, or both.

RFID label reader 26 wirelessly interrogates RFID label 54 on item 50. RFID label reader 26 couples to RFID label reader antenna plate 32. RFID label reader 26 may be integrated within item checkout device 10 or located externally.

RFID label reader antenna plate 32 is one portion of an antenna assembly. Another portion is driver assembly 80.

Control circuitry 28 controls operation of item checkout device 10. Control circuitry 28 receives electrical signals from detector 20 and determines item identification information stored within barcode label 52. Control circuitry 28 receives weight signals from scale assembly 22. Control circuitry 28 receives item identification information stored within RFID label 54 from RFID label reader 26. Control circuitry 28 sends weight information and item identification information to point-of-sale (POS) terminal 60.

POS terminal 60 determines a price of item 50 based upon the item identification information. POS terminal 60 also determines prices of produce items based upon the weight information and produce identification information entered into POS terminal 60 by an operator.

In alternative embodiments, item checkout device 10 may include a camera or other imaging device or a combination of imaging and laser-based components.

In yet another alternative embodiment, item checkout device may include no barcode reader, just scale and RFID label reader 26.

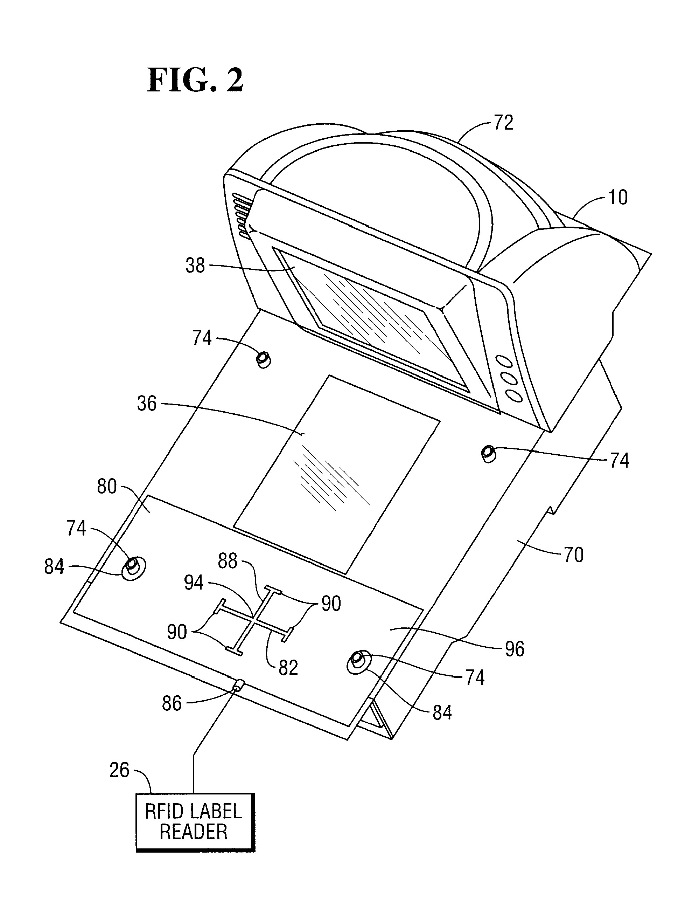

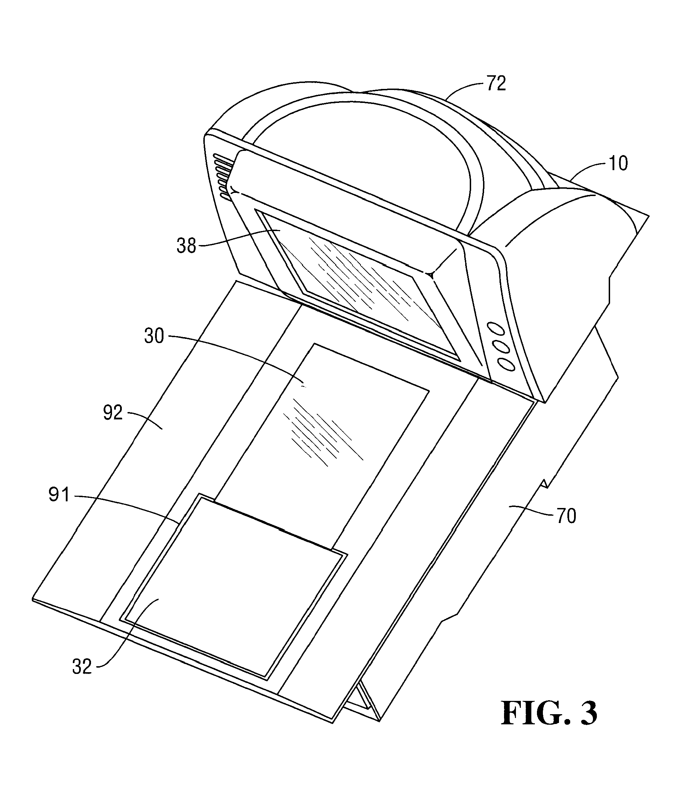

With reference to Figs. 2-3, an example item checkout device is illustrated.

Example item checkout device 10 includes a dual-aperture barcode scanner having substantially horizontal window 36 associated with base 70 and substantially vertical window 38 associated with tower 72. Posts 74 support weigh plate 24. An operator stands opposite window 38 and adjacent to antenna driver assembly 80.

Antenna driver assembly 80 includes slots 82 and 88 in ground plane 96 centered at point 94. The edges of slots 82 and 88 electromagnetically couple a radio frequency (RF) signal to RFID label reader antenna plate 32 in weigh plate 24. RFID label reader antenna plate 32 acts as a resonator for the RF signal from driver assembly 80 - RFID label reader antenna plate 32 re-radiates the signal in a reader field. A return signal from RFID label 54 to RFID label reader 26 follows the reverse path.

Slots 82 and 88 are generally linear and cross each other in a generally orthogonal fashion to form a "cross" or "X" pattern. Slots 82 and 88 may include orthogonal impedance matching stubs 90. Impedance matching stubs 90 may or may not be needed for proper impedance matching depending on design choices, including antenna materials. Driver assembly 80 drives slots with a ninety-degree phase shifted signal. This results in the radiated signal having circular polarization, which increases reliability in reading RFID label 54 regardless of the orientation of RFID label 54.

Example slot 82 is oriented along a long or "x" axis and example slot 88 is oriented along a short or "y" axis, both slots 82 and 88 forming a "+" or cross from the perspective of an operator of item checkout device 10. Alternatively, slots 82 and 88 may be oriented at about a forty-five degree angle to the illustrated orientation, so as to form an **"X"** from the perspective of an operator of item checkout device 10. The alternative orientation may eliminate some of the asymmetry between x axis and y axis impedances.

Example weigh plate 24 is made of metal to reduce damage during item identification. Weigh plate 24 includes substantially horizontal window 30, which may be made of a scratch resistant glass or other material. Weigh plate 24 further includes RFID label reader antenna plate 32.

RFID label reader antenna plate 32 includes a rectangular patch of floating metal in weigh plate 24. Other shapes are also envisioned.

Since the top portion of weigh plate 24 is made of metal, RFID label reader antenna plate 32 is isolated from other metal portions 92 of weigh plate 24 by a gap with non-conductive insulating material 91, such as non-conductive glue (for example epoxy).

RFID label reader antenna plate 32 may be formed by cutting out a section of a weigh plate without an antenna. The section is slightly reduced in size and reinserted with material 91 around the perimeter. RFID label reader antenna plate 32 remains flush with the top surface of weigh plate 24.

Alternative weigh plate designs include a plastic or other non-conductive substrate, such as fiberglass, with a metal shell for scratch protection. Plate 32 may be cut out of such a shell and bonded to the substrate.

RFID label reader antenna plate 32 is located above driver assembly 80 and adjacent window 30 on an operator side of item checkout device 10. RFID label reader antenna plate 32 is centered above where slots 82 and 88 cross. Window 36 is located above window 30.

Driver assembly 80 is located below RFID label reader antenna plate 32 and adjacent window 36 on an operator side of item checkout device 10. Apertures 84 allow posts 74 on the operator side to pass through unobstructed.

Driver assembly 80 may alternatively be located adjacent a different side of window 36. Correspondingly, RFID label reader antenna plate 32 may be located elsewhere in weigh plate 24 in a position above slots 82 and 88.

RFID label reader 26 couples to driver assembly 80 with a wired connection. Illustrated is coaxial connector 86. Connector 86 may include any suitable coaxial connector, such as a standard reverse polarity subminiature version A (RP-SMA) connector. The coaxial cable may include a fifty-ohm coaxial cable.

Alternatively, RFID label reader 26 may be integrated within driver assembly 80 to produce an integrated reader/antenna solution.

Weigh plate 24 and driver assembly 80 are separated by a small gap. Wireless coupling, as opposed to connecting RFID label reader 26 to weigh plate 24 with a wire, avoids placing any mechanical load on weigh plate 24. The weight information reported by scale assembly 22 is not affected by driver assembly 80 and RFID label reader antenna plate 32.

The gap may be small to maximize electromagnetic coupling and efficiency, but operation is still possible with larger gaps. An example gap is about three millimeters.

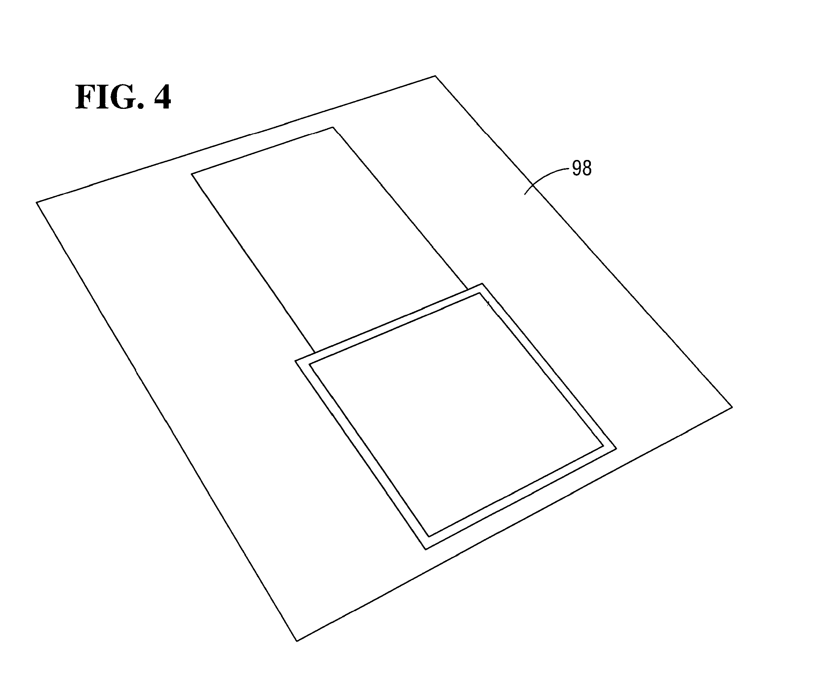

To prevent electrical contact between RFID label reader antenna plate 32 and driver assembly 80, weigh plate 24 further includes an underlying substrate 98 made of a non-conductive material with an aperture underlying window 30 (Fig 4).

The operating frequency is in the Industrial, Scientific, and Medical (ISM) band from 902-928 MHz (center frequency 915 MHz). Example RFID label reader antenna plate 32 is generally rectangular in shape, about 4.6 inches (or 11.68 centimetres) on one pair of sides along the y axis and 4.7 inches (or 11.94 centimetres) on another pair of sides along the x axis. The sides are different in length to achieve an optimal resonance frequency. The mounting substrate, in this case the printed circuit board material, dielectrically loads plate 32. This loading is different for different directions and reduces the wavelength. Also the structures around plate 32 affect the resonance slightly.

Slots 82 and 88 are smaller, though they need to be of a sufficiently large dimension to provide proper coupling with RFID label reader antenna plate 32. Example slots 82 and 88 are approximately 1.72 inches or 4.37 centimetres) .

The reader field overlaps a barcode reading zone above window 36 and in front of window 38. The orientation of driver assembly 80 and RFID label reader antenna plate 32 results in an antenna pattern that points upward with minimum radiation to the sides. This limits the RFID reading zone to approximately the barcode scanning zone, such that RFID labels on items in shopping carts or over scanners in adjacent lanes are not read by RFID label reader 26. This also minimizes operator motion while processing items 50 for identification. The size of the RFID reading zone may be controlled by adjusting the output power from RFID label reader 26.

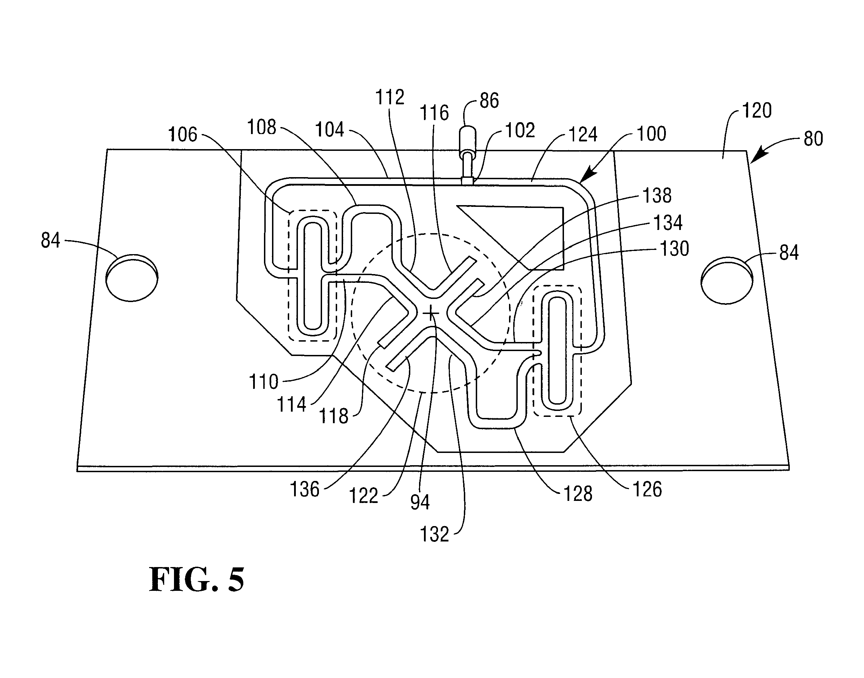

With reference to Fig. 5, driver assembly 80 is shown in more detail.

Driver assembly 80 includes antenna driver circuit 100. Elements of driver circuit 100 may be implemented as transmission lines and discrete components on one side of a printed circuit board 120, with slots 82 and 88 on an opposite side. Other implementations, such as surface mount discrete parts or a complete board based implementation using a higher board dielectric constant are envisioned.

Antenna driver circuit 100 primarily includes balun 102 and microstrip circuit paths 104 and 124.

Balun 102 provides a circuit transition between connector 86, which is the terminus of an unbalanced coaxial transmission line, and circuit paths 104 and 124. Balun 102 also splits power between circuit paths 104 and 124 (+90 degrees and -90 degrees phase shifted outputs).

Circuit paths 104 and 124 form a balanced transmission circuit, and drive slots 82 and 88, respectively, at different phases (ninety degrees). The ninety-degree phase shift causes a circular polarization of the field emitted by driver assembly 80 and coupled into plate 32, which then re-radiates the field on the top side of plate 32 to RFID label 54.

The field on the bottom side of plate 32 radiates between slots 82 and 88 and plate 32 for transmitting and between plate 32 and slots 82 and 88 for receiving. This field couples driver circuit 100 to plate 32.

Circuit path 104 includes Wilkinson Power Splitter (WPS) 106. Circuit path 124 includes WPS 126. Circuit paths 104 and 124 further include two orthogonal sets of drive elements, collectively identified as 122. Example drive elements 122 are centered opposite point 94, the intersection of slots 82 and 88.

WPS 106 splits power between circuit paths 108 and 110. Circuit path 108 drives orthogonal drive elements 112 and 116. Circuit path 110 drives orthogonal drive elements 114 and 118. Circuit path 108 induces a ninety-degree phase shift.

WPS 126 splits power between circuit paths 128 and 130. Circuit path 128 drives orthogonal drive elements 132 and 136. Circuit path 130 drives orthogonal drive elements 134 and 138. Circuit path 128 induces a ninety-degree phase shift.

Antenna driver circuit 100 produces a ninety-degree phase difference, which results in circular polarization. Circular polarization minimizes orientation sensitivity of RFID labels 54.

Advantageously, antenna driver circuit 100 can be easily tuned for performance.

For example, elements 116 and 136 can be adjusted in length, keeping elements 118 and 138 fixed, to tune for the impedance difference between the x and y axes of plate 32.

Other adjustments are also envisioned, including reducing the gap between RFID label reader antenna plate 32 and driver assembly 80, accurately dimensioning RFID label reader antenna plate 32, increasing the distance of RFID label reader antenna plate 32 from other metal of weigh plate 24, choosing materials to minimize the dielectric constants of the weigh plate substrate 98 and window 30, adjusting the shape and dimensions of slots 82 and 88, and adjusting the position of slots 82 and 88 under RFID label reader antenna plate 32.

Since antenna driver circuit 100 and its circularly polarized radiation pattern are efficient, RFID label reader 26 may produce less than a watt of output power level.

Although particular reference has been made to certain embodiments, variations and modifications are also envisioned within the scope of the present invention.

## Claims

1. A radio frequency identification label reader antenna comprising:
a first portion (32) within a weigh plate (24) suitable for operation with a scale (22) of an item checkout device (10); and
a second portion (80) below the first portion (32) including a conductive layer with substantially orthogonal slots (82,88) having radiating edges, a drive circuit (100) for driving the slots (82,88) to radiate a circularly polarized electromagnetic field, and a non-conductive layer separating the conductive layer from the drive circuit (100).

2. The radio frequency identification label reader antenna of claim 1, wherein the first portion (32) is flush mounted within the weigh plate (24).

3. The radio frequency identification label reader antenna of claim 1, wherein the first portion (32) is mounted within an aperture in the weigh plate and isolated from a remainder of the weigh plate by an insulator (91).

4. The radio frequency identification label reader antenna of claim 1, wherein the first portion (32) comprises a section of the weigh plate (24).

5. The radio frequency identification label reader antenna of any preceding claim, wherein the substantially orthogonal slots (82,88) are "+" shaped from the perspective of an operator.

6. The radio frequency identification label reader antenna of any of claims 1 to 4, wherein the substantially orthogonal slots (82,88) are "x" shaped from the perspective of an operator.

7. The radio frequency identification label reader antenna of any preceding claim, wherein the drive circuit (100) comprises a balanced transmission circuit including first and second circuit paths (104,124) for driving the slots (82,88) at different phases.

8. The radio frequency identification label reader antenna of claim 7, wherein each of the first and second circuit paths (104,124) comprises a power splitter (106,126) for splitting power between third (108,128) and fourth (110,130) paths ending in pairs of substantially orthogonal drive elements (112,116; 114,118; 132,136, 134,138).

9. The radio frequency identification label reader antenna of claim 8, wherein the third paths (108,128) induce a ninety-degree phase shift with respect to the fourth paths (110, 130) .

10. The radio frequency identification label reader antenna of claim 8 or 9, wherein the pairs of substantially orthogonal drive elements (112,116; 114,118; 132,136, 134,138) are centered about the substantially orthogonal slots (82,88) but cross the substantially orthogonal slots (82,88).

11. The radio frequency identification label reader antenna of claim 7, wherein the drive circuit (100) further comprises a balun (102) for splitting power between the first and second circuit paths (104,124).

12. The radio frequency identification label reader antenna of claim 12, wherein the drive circuit (100) further comprises a connector (86) coupled to the balun (102) for connecting a cable from a radio frequency identification label reader (26).

13. A method of reading a radio frequency identification label comprising:
receiving a first signal from a radio frequency identification label reader by an antenna, the antenna including a conductive layer with substantially orthogonal slots having radiating edges;
radiating a circularly polarized electromagnetic field by the substantially orthogonal slots;
receiving a second signal from the radio frequency identification label within the circularly polarized electromagnetic field by the substantially orthogonal slots; and
sending the second signal to the radio frequency identification label reader by the antenna.

14. The method of claim 13, wherein the radiating step comprises:
splitting the first signal into third and fourth signals along first and second circuit paths;
splitting the third signal along fifth and sixth circuit paths;
producing a ninety-degree phase shift relative to the sixth circuit path by the fifth circuit path;
splitting the fourth signal along seventh and eighth circuit paths;
producing a ninety-degree phase shift relative to the eighth circuit path by the seventh circuit path;
driving a first pair of substantially orthogonal drive elements of the fifth circuit path;
driving a second pair of substantially orthogonal drive elements of the sixth circuit path;
driving a third pair of substantially orthogonal drive elements of the seventh circuit path; and driving a fourth pair of substantially orthogonal drive elements of the eighth circuit path.
